# FASCICULE DE BREVET EUROPEEN

(11) **EP 3 423 600 B1**
(45) Date de publication et mention de la délivrance du brevet: **18.10.2023**
(21) Numéro de dépôt: 17715769.0
(22) Date de dépôt: 28.02.2017
(51) Int. Cl.: C14B 1/56, B60R 13/00, B60R 13/02

(54) **PROCÉDÉ DE RÉALISATION D'UN HABILLAGE DÉCORATIF D'UN ÉLÉMENT D'HABITACLE DE VÉHICULE ET ENSEMBLE COMPRENANT UN ÉLÉMENT D'HABITACLE**
VERFAHREN ZUR HERSTELLUNG EINER DEKORATIVEN AUSKLEIDUNG FÜR EIN KRAFTFAHRZEUGINNENRAUMELEMENT UND EINHEIT MIT EINEM AUSKLEIDUNGELEMENT
METHOD FOR MANUFACTURING A DECORATIVE LINING FOR A VEHICLE INTERIOR ELEMENT AND ASSEMBLY COMPRISING A LINING ELEMENT

(30) Priorité: 02.03.2016 FR 1651782
(43) Date de publication de la demande: 09.01.2019
(73) Titulaire: PSA Automobiles SA, 78300 Poissy (FR); Reydel Automotive France SAS, 62440 Harnes (FR)
(72) Inventeur: VANNESTE, Pascal, 77240 Vert St Denis (FR); ROUSSEAU, Frederic, 28320 Gallardon (FR); MATUSIK, Jacques, 78180 Montigny Le Bretonneux (FR); HOCHART, Olivier, 62980 Noyelles les Vermelles (FR); BONY, Claire, 59128 Flers en Escrebieux (FR); BARAN, Olivier, 62220 Carvin (FR)
(74) Mandataire: Fernandez, Francis Lionel
(86) Numéro de dépôt international: PCT/FR2017/050442
(87) Numéro de publication internationale: WO 2017/149235

(56) Documents cités:
- EP-A1- 1 177 949
- DE-A1-102014 201 730
- FR-A1- 2 985 696
- JP-A- 2006 116 062

## Description

L'invention concerne la réalisation des habillages décoratifs d'éléments d'habitacles de véhicules.

Comme le sait l'homme de l'art, plusieurs procédés (ou méthodes) ont été proposé(e)s pour réaliser des habillages décoratifs d'éléments d'habitacle de véhicule, comme par exemple une planche de bord, un panneau de porte, un toit, un plafonnier, une console centrale, un capot de boîte à gants, une coque centrale de volant ou un siège.

Le document FR2985696 A1 décrit un procédé de réalisation d'un habillage décoratif avec un insert solidaire d'un élément d'habitacle de véhicule mais sans rembordement de peaux d'habillage à la jonction de cet insert. Le document DE102014201730 A1 décrit l'intégration d'un insert lumineux dans un élément d'habillage d'un habitacle de véhicule avec remordement de peaux d'habillage à la jonction de cet insert lumineux.

Ainsi, il est possible de solidariser à l'élément d'habitacle un insert synthétique comprenant une face externe éventuellement grainée et/ou peinte, ou bien revêtue d'un surmoulage (ou gaine) synthétique éventuellement avec interposition d'une couche en mousse de faible épaisseur, ou encore revêtue d'une couche en mousse épaisse, elle-même revêtue d'une peau synthétique.

Ces procédés (ou méthodes) présentent tous au moins un inconvénient. En effet, ils induisent un aspect relativement peu esthétique et/ou un plan de joint visible et/ou une brillance de grain mal maîtrisée et/ou un étirement des grains selon un plan de forme de l'élément. Plus généralement, le résultat de la mise en oeuvre de ces procédés est difficilement compatible avec une qualité perçue de haut de gamme.

Certes, pour améliorer la qualité perçue, il est également possible de solidariser du cuir sur l'élément d'habitacle. Mais cela n'offre pas de diversité, et donc ne permet pas de différencier instantanément un modèle d'un autre au sein d'une marque ou une marque d'une autre, ou encore de personnaliser les habitacles des véhicules en fonction des souhaits de leurs propriétaires.

L'invention a donc notamment pour but d'améliorer la situation.

Elle propose notamment à cet effet un procédé, destiné à permettre la réalisation d'un habillage décoratif sur un élément d'un habitacle d'un véhicule, et comprenant :
- une étape (i) dans laquelle on amincit au moins un bord de deux pièces en cuir sur une face interne, et on replie chaque bord aminci afin de constituer un rembordement sur chaque pièce en cuir, et
- une étape (ii) dans laquelle on couple à cet élément les pièces en cuir et un insert décoratif intercalé entre ces dernières en ayant deux bords placés sous les rembordements.

Un tel procédé permet d'améliorer notablement la qualité perçue des habitacles, et d'offrir une grande diversité de différenciation et de personnalisation.

Le procédé selon l'invention peut comporter d'autres caractéristiques qui peuvent être prises séparément ou en combinaison, et notamment :
- dans un premier exemple de réalisation, on peut commencer dans l'étape (ii) par coupler l'insert décoratif en un endroit choisi de l'élément d'habitacle, puis on peut coupler chaque pièce en cuir à l'élément d'habitacle en recouvrant les deux bords de l'insert décoratif avec une partie au moins des rembordements ;
   > dans l'étape (ii) on peut solidariser fixement les pièces en cuir et l'insert décoratif sur une face externe d'une couche d'interface qui a été préalablement solidarisée fixement à une face externe de l'élément d'habitacle ;
- dans un deuxième exemple de réalisation, on peut, dans l'étape (i), avant d'effectuer le repliement, solidariser fixement une pièce de support sur une face externe de l'une des pièces en cuir, au niveau de son bord aminci, puis on peut replier chaque bord aminci afin de constituer des rembordements dont l'un est prolongé par la pièce de support qui lui est solidarisée. Dans ce cas, dans l'étape (ii) on peut coupler à l'élément d'habitacle les pièces en cuir avec la pièce de support prolongeant l'un de leurs rembordements de sorte qu'elle sépare ces pièces en cuir en ayant deux de ses bords placés sous les rembordements, puis on peut solidariser fixement l'insert décoratif sur la pièce de support en plaçant ses deux bords respectivement sous les deux rembordements ;
- dans un troisième exemple de réalisation, on peut, dans l'étape (i), avant d'effectuer le repliement, solidariser fixement une pièce de support, munie de l'insert décoratif, sur une face externe de l'une des pièces en cuir, au niveau de son bord aminci, puis on peut replier chaque bord aminci afin de constituer des rembordements dont l'un est prolongé par la pièce de support qui lui est solidarisée. Dans ce cas, dans l'étape (ii) on peut coupler à l'élément les pièces en cuir avec la pièce de support prolongeant l'un de leurs rembordements de sorte qu'elle sépare ces pièces en cuir en ayant deux de ses bords placés sous les rembordements et une face supérieure munie de l'insert décoratif avec ses deux bords placés respectivement sous les deux rembordements ;
   > dans l'étape (i), avant d'effectuer la solidarisation fixe de la pièce de support sur une face externe de l'une des pièces en cuir, on peut coller l'insert décoratif sur la face supérieure de la pièce de support ;
   > dans l'étape (ii) on peut solidariser fixement les pièces en cuir, hormis leurs rembordements, sur une face externe d'une couche d'interface préalablement solidarisée fixement à une face externe de l'élément et interrompue au niveau de chacun des rembordements et de la pièce de support. En variante, dans l'étape (ii) on peut solidariser fixement les pièces en cuir et la pièce de support, hormis des parties situées sous les rembordements, sur une face externe d'une couche d'interface préalablement solidarisée fixement à une face externe de l'élément et interrompue au niveau de chacun des rembordements ;
- dans les deuxième et troisième exemples de réalisation, on peut, dans l'étape (ii), solidariser fixement sur une face externe de l'élément les pièces en cuir et la pièce de support préalablement munie d'une bande de matière intercalaire sur une partie d'une face inférieure située sous l'insert décoratif ;
- dans un quatrième exemple de réalisation, on peut, dans l'étape (i), avant d'effectuer le repliement, solidariser fixement une pièce de support sur une face externe de chaque pièce en cuir, au niveau de son bord aminci, puis on peut replier chaque bord aminci afin de constituer des rembordements prolongés chacun par la pièce de support solidarisée. Dans ce cas, dans l'étape (ii) on peut coupler à l'élément d'habitacle les pièces en cuir avec les pièces de support prolongeant leurs rembordements de sorte qu'elles se prolongent mutuellement, puis on peut solidariser fixement l'insert décoratif sur les pièces de support en plaçant ses deux bords respectivement sous les deux rembordements ;
- dans les deuxième et quatrième exemples de réalisation, et dans certaines variantes du troisième exemple de réalisation, on peut, dans l'étape (ii), solidariser fixement les pièces en cuir et chaque pièce de support sur une face externe d'une couche d'interface préalablement solidarisée fixement à une face externe de l'élément d'habitacle ;
- dans les quatre exemples de réalisation, l'éventuelle couche d'interface peut être choisie parmi (au moins) une gaine solidarisée par chauffage à l'élément d'habitacle, une mousse solidarisée par collage à l'élément d'habitacle, et une gaine solidarisée par moussage à l'élément d'habitacle ;
- dans l'étape (i), après avoir replié les bords amincis en superposant deux sous-parties, on peut solidariser ces dernières l'une à l'autre par couture ;
- dans l'étape (i) on peut amincir au moins un bord de chaque pièce en cuir sur au moins une moitié de son épaisseur.

L'invention propose également un élément destiné à équiper un habitacle d'un véhicule et comprenant un habillage décoratif réalisé au moyen d'un procédé de réalisation du type de celui présenté ci-avant.

L'invention propose également un véhicule comprenant un habitacle comportant au moins un élément du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe, des parties de deux pièces en cuir après amincissement de l'un de leurs bords pendant une étape (i) d'un procédé selon l'invention,
- la figure 2 illustre schématiquement, dans une vue en coupe, les pièces en cuir de la figure 1 après repliement de leur bord aminci, pendant l'étape (i) d'un premier exemple de réalisation du procédé selon l'invention,
- la figure 3 illustre schématiquement, dans une vue en coupe, le couplage d'un insert décoratif à un élément d'habitacle muni d'une couche d'interface, pendant l'étape (ii) du premier exemple de réalisation du procédé selon l'invention,
- la figure 4 illustre schématiquement, dans une vue en coupe, l'élément d'habitacle de la figure 3 muni de son habillage décoratif, à la fin de l'étape (ii) du premier exemple de réalisation du procédé selon l'invention,
- la figure 5 illustre schématiquement, dans une vue en coupe, des parties de deux pièces en cuir après amincissement de l'un de leurs bords et solidarisation d'une pièce de support à l'un des deux bords amincis, pendant une étape (i) d'un deuxième exemple de réalisation du procédé selon l'invention,
- la figure 6 illustre schématiquement, dans une vue en coupe, les pièces en cuir de la figure 5 après repliement de leur bord aminci, pendant l'étape (i) du deuxième exemple de réalisation du procédé selon l'invention,
- la figure 7 illustre schématiquement, dans une vue en coupe, un élément d'habitacle muni d'une couche d'interface et d'un habillage décoratif, à la fin de l'étape (ii) du deuxième exemple de réalisation du procédé selon l'invention,
- la figure 8 illustre schématiquement, dans une vue en coupe, des parties de deux pièces en cuir après amincissement de l'un de leurs bords et solidarisation d'une pièce de support, munie d'un insert décoratif, à l'un des deux bords amincis, pendant une étape (i) d'un troisième exemple de réalisation du procédé selon l'invention,
- la figure 9 illustre schématiquement, dans une vue en coupe, les pièces en cuir de la figure 8 après repliement de leur bord aminci, pendant l'étape (i) du troisième exemple de réalisation du procédé selon l'invention,
- la figure 10 illustre schématiquement, dans une vue en coupe, un élément d'habitacle muni d'une couche d'interface et d'un habillage décoratif, à la fin de l'étape (ii) du troisième exemple de réalisation du procédé selon l'invention,
- la figure 11 illustre schématiquement, dans une vue en coupe, un élément d'habitacle muni d'une couche d'interface et d'un habillage décoratif, à la fin d'une première variante de l'étape (ii) du troisième exemple de réalisation du procédé selon l'invention,
- la figure 12 illustre schématiquement, dans une vue en coupe, un élément d'habitacle muni d'une couche d'interface et d'un habillage décoratif, à la fin d'une seconde variante de l'étape (ii) du troisième exemple de réalisation du procédé selon l'invention,
- la figure 13 illustre schématiquement, dans une vue en coupe, des parties de deux pièces en cuir après amincissement de l'un de leurs bords et solidarisation d'une pièce de support à chacun de ces deux bords amincis, pendant une étape (i) d'un quatrième exemple de réalisation du procédé selon l'invention,
- la figure 14 illustre schématiquement, dans une vue en coupe, les pièces en cuir de la figure 13 après repliement de leur bord aminci, pendant l'étape (i) du quatrième exemple de réalisation du procédé selon l'invention,
- la figure 15 illustre schématiquement, dans une vue en coupe, un élément d'habitacle muni d'une couche d'interface et d'un habillage décoratif, à la fin de l'étape (ii) du quatrième exemple de réalisation du procédé selon l'invention.

L'invention a notamment pour but de proposer un procédé destiné à permettre la réalisation d'un habillage décoratif HD sur un élément EH d'un habitacle d'un véhicule.

On considère dans ce qui suit, à titre d'exemple non limitatif, que l'élément d'habitacle EH est une partie d'une planche de bord destinée à être visible à l'intérieur d'un habitacle d'un véhicule. Mais l'invention n'est pas limitée à ce type d'élément d'habitacle. Elle concerne en effet n'importe quel élément présentant au moins une face externe destinée à être visible à l'intérieur d'un habitacle de véhicule et à comporter un habillage décoratif. Ainsi, elle concerne notamment les planches de bord, les panneaux de porte, les toits, les plafonniers, les consoles centrales, les capots de boîte à gants, les coques centrales de volant et les sièges (assise, dossier et appui-tête).

Par ailleurs, on considère dans ce qui suit, à titre d'exemple non limitatif, que le véhicule est de type automobile. Il s'agit par exemple d'une voiture. Mais l'invention n'est pas limitée à ce type de véhicule. Elle concerne en effet tout type de véhicule, terrestre, maritime (ou fluvial), ou aérien.

Le procédé de réalisation selon l'invention comprend deux étapes (i) et (ii) mises en oeuvre lorsque l'on dispose de deux pièces en cuir PCj (j = 1 ou 2) ayant chacune une face interne FI1 destinée à être orientée vers un élément d'habitacle EH, et une face externe FE1 opposée à la face interne FI1 et visible dans l'habitacle.

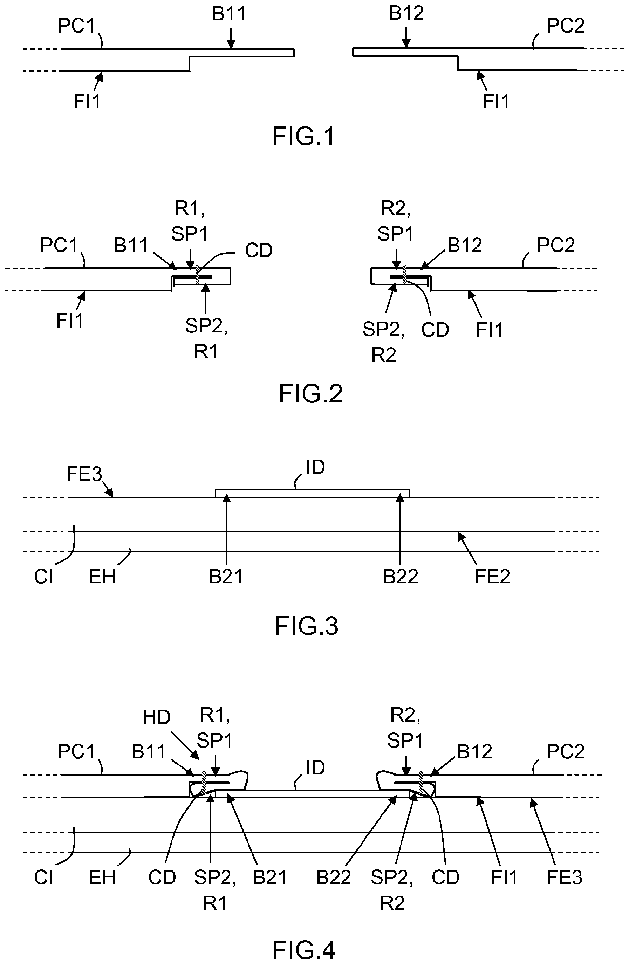

Une première étape (i) du procédé selon l'invention consiste à amincir au moins un bord B1j de chacune des deux pièces en cuir PCj sur leur face interne FI1 (comme illustré sur la figure 1), puis à replier chaque bord aminci B1j afin de constituer un rembordement Rj sur chaque pièce en cuir PCj (comme illustré sur les figures 2, 6, 9 et 14).

L'action consistant à amincir les bords B1j est parfois appelée « parer ». Elle peut être réalisée manuellement au moyen d'un couteau à parer ou automatiquement au moyen d'une machine adaptée à cet effet.

Par exemple, chaque rembordement Rj peut être rendu pérenne par une solidarisation des deux sous-parties repliées SPk (k = 1 ou 2) de chaque bord aminci B1j. Cette solidarisation peut se faire par une couture décorative (ou surpiqure) CD (comme illustré sur les figures 2, 6, 9 et 14), ou par collage.

Une seconde étape (ii) du procédé selon l'invention consiste à coupler à l'élément EH les pièces en cuir PCj et un insert décoratif ID, ce dernier (ID) étant intercalé entre les pièces en cuir PCj en ayant deux bords (opposés) B2j placés sous les rembordements Rj de ces derniers (PCj), comme illustré sur les figures 4, 7, 10 et 15. L'insert décoratif ID constitue ainsi une bande décorative séparant les deux pièces en cuir PCj et visible dans l'espace défini entre les deux rembordements Rj.

On notera que ces deux étapes (i) et (ii) peuvent être mises en oeuvre en un même endroit ou en des endroits différents.

Plusieurs exemples de réalisation peuvent être envisagés pour mettre en oeuvre ces deux étapes (i) et (ii). Quatre de ces exemples de réalisation sont décrits ci-après en référence aux figures 1 à 4, 5 à 7, 8 à 12, et 13 à 15, à titre d'exemples illustratifs.

Un premier exemple de réalisation est illustré non limitativement sur les figures 1 à 4. Il comprend une première étape (i) dans laquelle on définit au moins un bord aminci B1j sur la face interne FI1 des deux pièces en cuir PCj (comme illustré sur la figure 1), puis on constitue un rembordement Rj avec chaque bord aminci B1j (comme illustré sur la figure 2).

Dans la seconde étape (ii) on commence par coupler l'insert décoratif ID en un endroit choisi de l'élément d'habitacle EH (comme illustré sur la figure 3), puis on couple chaque pièce en cuir PCj à cet élément d'habitacle EH en recouvrant les deux bords B2j de l'insert décoratif ID avec une partie au moins des rembordements Rj.

On notera que dans l'exemple non limitatif illustré sur les figures 3 et 4, l'insert décoratif ID et les pièces en cuir PCj sont couplés à l'élément d'habitacle EH via une couche d'interface CI. Plus précisément, on solidarise fixement les pièces en cuir PCj et l'insert décoratif ID sur une face externe FE3 d'une couche d'interface CI qui a été préalablement solidarisée fixement à une face externe FE2 de l'élément d'habitacle EH.

Cette couche d'interface CI peut, par exemple, être une gaine (ou peau) solidarisée par chauffage (« thermogainage ») à l'élément d'habitacle, ou une mousse solidarisée par collage à l'élément d'habitacle, ou encore une gaine (ou peau) solidarisée par moussage à l'élément d'habitacle. La gaine (ou peau) peut, par exemple, être réalisée en polypropylène (PP, P/E-MD15, ou PP-MD20). La mousse est de préférence destinée à conférer une sensation de moelleux. Elle peut, par exemple, être réalisée en polyuréthane (PU).

La solidarisation fixe des pièces en cuir PCj et de l'insert décoratif ID sur la face externe FE3 de la couche d'interface CI peut, par exemple, se faire par collage.

Dans ce premier exemple de réalisation, les pièces en cuir PCj sont couplées à l'élément d'habitacle EH, après que l'insert décoratif ID ait été co uplé à ce dernier (EH). Par conséquent, on n'a pas besoin de venir loger les bords opposés B2j de l'insert décoratif ID sous les rembordements Rj, ce qui nécessiterait que l'insert décoratif ID soit au moins légèrement flexible (ou souple). Il en résulte que l'insert décoratif ID peut être rigide ou flexible.

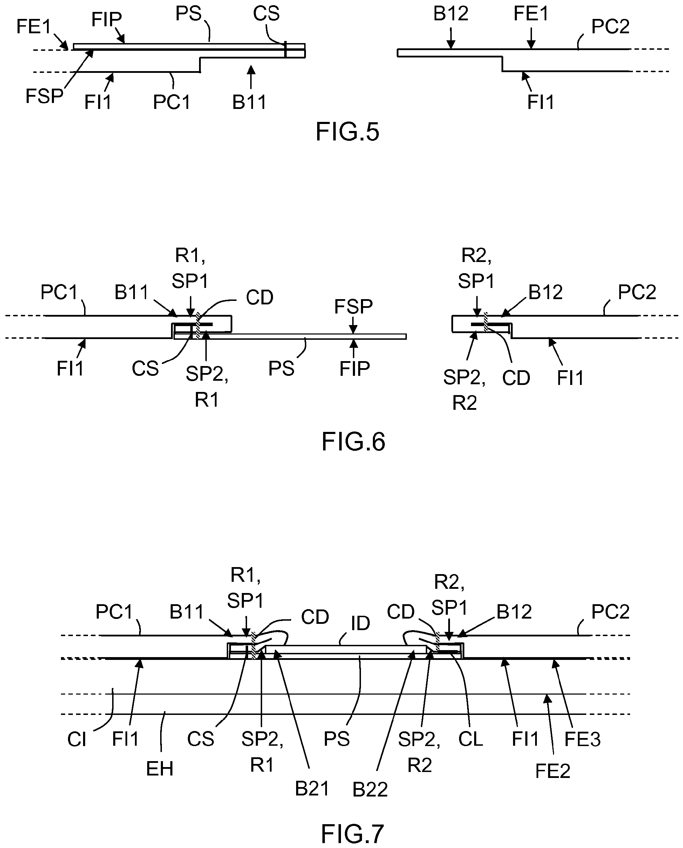

Un deuxième exemple de réalisation est illustré non limitativement sur les figures 5 à 7. Il comprend une première étape (i) dans laquelle on définit au moins un bord aminci B1j sur la face interne FI1 des deux pièces en cuir PCj (comme illustré sur la figure 1). Puis, avant d'effectuer le repliement des bords amincis B1j, on solidarise fixement une pièce de support PS sur la face externe FE1 de l'une des deux pièces en cuir PCj (ici PC1), au niveau de son bord aminci B1j (ici B11). Cette solidarisation peut se faire par une couture CS (comme illustré sur les figures 5 à 7) et/ou par collage. Puis on replie chaque bord aminci B1j afin de constituer des rembordements Rj. Comme illustré sur la figure 6, la constitution du rembordement R1 par repliement fait que ce dernier (R1) se retrouve prolongé par la pièce de support PS1 qui lui est solidarisée.

On notera que la pièce de support PS peut, par exemple, être en matériau textile (tissu ou non tissé) ou en en cuir ou encore en matériau synthétique rigide ou flexible (ou souple), comme par exemple en PVC.

Dans la seconde étape (ii) on couple à l'élément d'habitacle EH les pièces en cuir PCj avec la pièce de support PS qui prolonge l'un de leurs rembordements Rj (ici R1) de sorte qu'elle (PS) sépare ces pièces en cuir PCj en ayant deux de ses bords placés sous les deux rembordements Rj.

La seconde pièce en cuir PC2 est solidarisée à la face supérieure FSP de la pièce de support PS, par exemple par collage CL.

Puis, on solidarise fixement l'insert décoratif ID sur la pièce de support PS en plaçant ses deux bords B2j respectivement sous les deux rembordements Rj, comme illustré sur la figure 7.

On notera que dans l'exemple non limitatif illustré sur la figure 7, la pièce de support PS, l'insert décoratif ID et les pièces en cuir PCj sont couplés à l'élément d'habitacle EH via une couche d'interface CI. Plus précisément, on solidarise fixement les pièces en cuir PCj et la pièce de support PS sur une face externe FE3 d'une couche d'interface CI qui a été préalablement solidarisée fixement à une face externe FE2 de l'élément d'habitacle EH, et on solidarise fixement l'insert décoratif ID sur la face supérieure FSP de la pièce de support PS.

Cette couche d'interface CI peut, par exemple, être une gaine (ou peau) solidarisée par chauffage (« thermogainage ») ou une mousse solidarisée par collage ou encore une gaine (ou peau) solidarisée par moussage. La gaine (ou peau) peut, par exemple, être réalisée en polypropylène. La mousse est de préférence destinée à conférer une sensation de moelleux. Elle peut, par exemple, être réalisée en polyuréthane.

La solidarisation fixe des pièces en cuir PCj et de la pièce de support PS sur la face externe FE3 de la couche d'interface CI peut, par exemple, se faire par collage. De même, la solidarisation fixe de l'insert décoratif ID sur la face supérieure FSP de la pièce de support PS peut, par exemple, se faire par collage. Par ailleurs, on peut solidariser fixement à la pièce de support PS la seconde sous-partie SP2 du rembordement R2 (qui n'est pas solidarisé à la pièce de support PS), par exemple par collage.

Dans ce deuxième exemple de réalisation, les pièces en cuir PCj sont couplées à l'élément d'habitacle EH, avant que l'insert décoratif ID ait été couplé à ce dernier (EH), via la pièce de support PS. Par conséquent, on a besoin de venir loger les bords opposés B2j de l'insert décoratif ID sous les rembordements Rj (et plus précisément entre ces derniers (Rj) et les bords opposés de la pièce de support PS), ce qui nécessite que l'insert décoratif ID soit au moins légèrement flexible (ou souple).

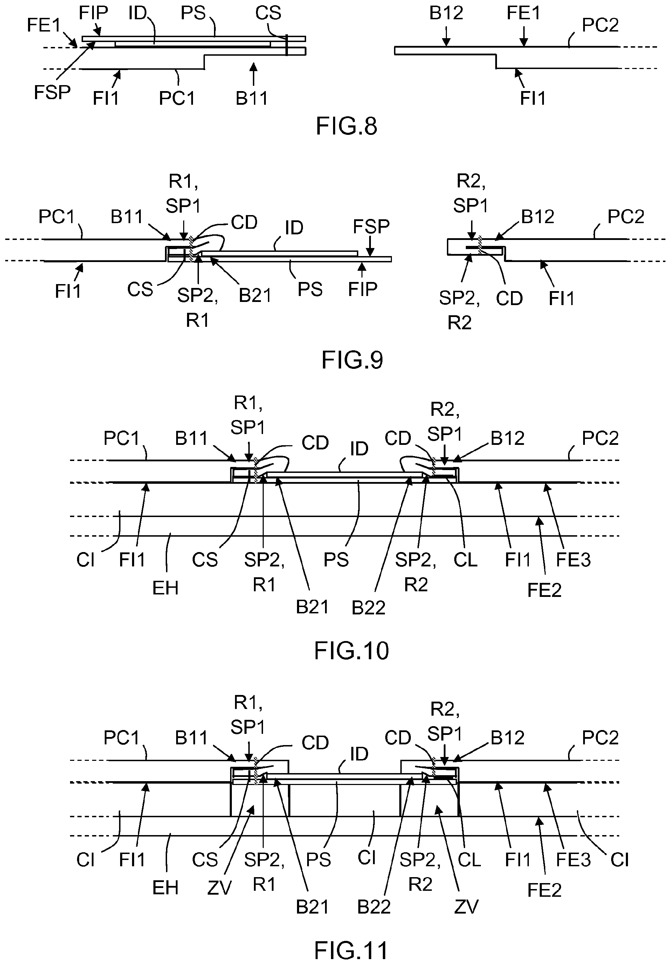

Un troisième exemple de réalisation est illustré non limitativement sur les figures 8 à 10. Il comprend une première étape (i) dans laquelle on définit au moins un bord aminci B1j sur la face interne FI1 des deux pièces en cuir PCj (comme illustré sur la figure 1). Puis, avant d'effectuer le repliement des bords amincis B1j, on solidarise fixement une pièce de support PS, munie sur sa face supérieure FSP d'un insert décoratif ID, sur la face externe FE1 de l'une des deux pièces en cuir PCj (ici PC1), au niveau de son bord aminci B1j (ici B11). Cette solidarisation peut se faire par une couture CS (comme illustré sur les figures 8 à 10) et/ou par collage.

On notera que dans la première étape (i), avant d'effectuer la solidarisation fixe de la pièce de support PS sur la face externe FE1 de l'une des pièces en cuir PCj, on peut coller l'insert décoratif ID sur la face supérieure FSP de la pièce de support PS. Ce collage peut même être réalisé avant la définition des bords amincis B1j sur les faces internes FI1 des deux pièces en cuir PCj.

On notera également que la pièce de support PS peut, par exemple, être en matériau textile (tissu ou non tissé) ou en en cuir ou encore en matériau synthétique rigide ou flexible (ou souple), comme par exemple en PVC.

Puis on replie chaque bord aminci B1j afin de constituer des rembordements Rj. Comme illustré sur la figure 9, la constitution du rembordement R1 par repliement fait que ce dernier (R1) se retrouve prolongé par la pièce de support PS1 (avec son insert décoratif ID) qui lui est solidarisée.

Dans la seconde étape (ii) on couple à l'élément d'habitacle EH les pièces en cuir PCj avec la pièce de support PS qui prolonge l'un de leurs rembordements Rj (ici R1) de sorte qu'elle (PS) sépare ces pièces en cuir PCj en ayant deux de ses bords placés sous les deux rembordements Rj et sa face supérieure FSP munie de l'insert décoratif ID avec ses deux bords B2j placés respectivement sous les deux rembordements Rj.

La seconde pièce en cuir PC2 est solidarisée à la face supérieure FSP de la pièce de support PS, par exemple par collage CL.

On notera que dans l'exemple non limitatif illustré sur la figure 10, la pièce de support PS, l'insert décoratif ID et les pièces en cuir PCj sont couplés à l'élément d'habitacle EH via une couche d'interface CI. Plus précisément, on solidarise fixement les pièces en cuir PCj et la pièce de support PS (avec son insert décoratif ID) sur une face externe FE3 d'une couche d'interface CI qui a été préalablement solidarisée fixement à une face externe FE2 de l'élément d'habitacle EH.

Cette couche d'interface CI peut, par exemple, être une gaine (ou peau) solidarisée par chauffage (« thermogainage ») ou une mousse solidarisée par collage ou encore une gaine (ou peau) solidarisée par moussage. La gaine (ou peau) peut, par exemple, être réalisée en polypropylène. La mousse est de préférence destinée à conférer une sensation de moelleux. Elle peut, par exemple, être réalisée en polyuréthane.

La solidarisation fixe des pièces en cuir PCj et de la pièce de support PS sur la face externe FE3 de la couche d'interface CI peut, par exemple, se faire par collage. De même, la solidarisation fixe de l'insert décoratif ID sur la face supérieure FSP de la pièce de support PS peut, par exemple, se faire par collage. Par ailleurs, on peut solidariser fixement à la pièce de support PS la seconde sous-partie SP2 du rembordement R2 (qui n'est pas solidarisé à la pièce de support PS), par exemple par collage.

Dans une première variante de réalisation, illustrée non limitativement sur la figure 11, la couche d'interface CI peut s'étendre partiellement sous les pièces en cuir PCj et la pièce de support PS. Plus précisément, dans la seconde étape (ii) on peut solidariser fixement les pièces en cuir PCj, hormis leurs rembordements Rj, sur la face externe FE3 d'une couche d'interface CI préalablement solidarisée fixement à la face externe FE2 de l'élément EH et interrompue au niveau de chacun des rembordements Rj.

En d'autres termes, la couche d'interface CI est réalisée en trois sous-parties, séparées deux à deux par des zones vides ZV, de manière à ne pas être présente sous chacun des deux rembordements Rj. Les zones vides ZV intercalées entre deux sous-parties de la couche d'interface CI peuvent être définies, par exemple, par une attaque laser ou un fraisage (mais tout autre procédé peut être envisagé).

Ces zones vides ZV définies sous les rembordements Rj sont destinées à éviter la formation de bourrelets aux extrémités de ces derniers (Rj), et à absorber les surépaisseurs liées au rembordement du cuir et l'assemblage de la pièce de support PS.

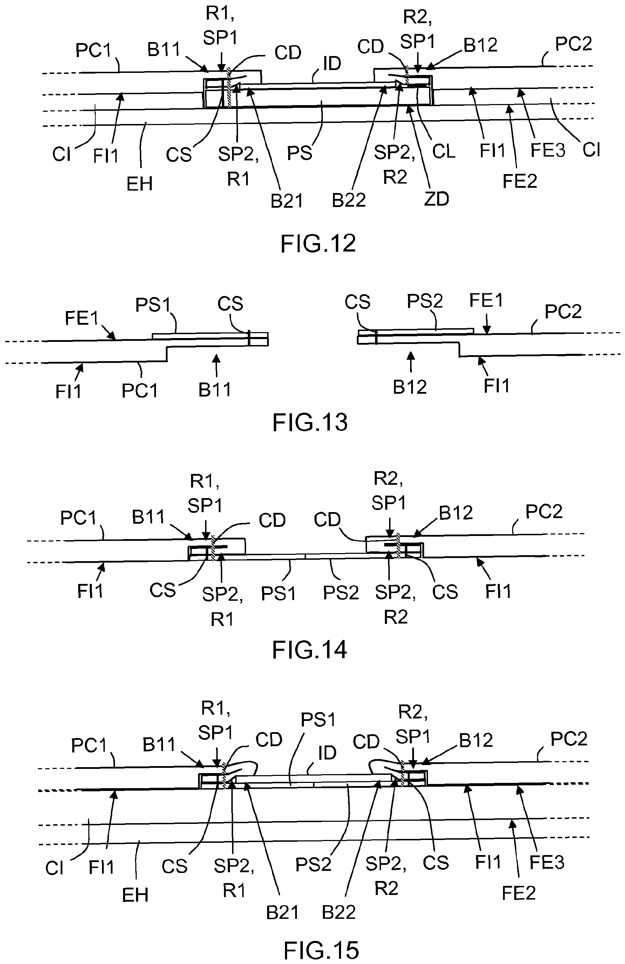

Dans une seconde variante de réalisation, illustrée non limitativement sur la figure 12, la couche d'interface CI peut s'étendre partiellement sous les pièces en cuir PCj, mais pas sous la pièce de support PS. Plus précisément, dans la seconde étape (ii) on peut solidariser fixement les pièces en cuir PCj et la pièce de support PS, hormis des parties situées sous les rembordements Rj, sur la face externe FE3 d'une couche d'interface CI préalablement solidarisée fixement à la face externe FE2 de l'élément EH et interrompue au niveau de chacun des rembordements Rj et de la pièce de support PS.

En d'autres termes, la couche d'interface CI est réalisée en deux sous-parties, séparées l'une de l'autre par une zone ZD (dépourvue de matière), de manière à ne pas être présente sous les deux rembordements Rj et sous la pièce de support PS. La zone ZD intercalée entre les deux sous-parties de la couche d'interface CI peut être définie, par exemple, par une attaque laser ou un fraisage (mais tout autre procédé peut être envisagé).

Cette zone ZD définie sous les rembordements Rj et sous la pièce de support PS est destinée à éviter la formation de bourrelets aux extrémités des rembordements Rj et à absorber les surépaisseurs liées au rembordement du cuir et l'assemblage de la pièce de support PS.

On notera, comme illustré non limitativement sur la figure 12, que pour combler la zone ZD on peut utiliser une pièce de support PS présentant une plus grande épaisseur que celle qu'elle présente dans les autres exemples de réalisation.

On notera également que dans l'un au moins des premier, deuxième et troisième exemples de réalisation, on peut, dans la seconde étape (ii), solidariser fixement sur la face externe FE2 de l'élément EH les pièces en cuir PCj et la pièce de support PS préalablement munie d'une bande de matière intercalaire sur une partie d'une face inférieure FIP située sous l'insert décoratif ID. La face inférieure FIP est celle qui est opposée à la face supérieure FSP de la pièce de support PS.

Cette bande de matière intercalaire peut, par exemple, être réalisée en cuir ou en matériau plastique (ou synthétique). Elle est destinée à réduire la différence d'épaisseur entre chaque rembordement Rj et l'insert décoratif ID, et confère un aspect bombé à ce dernier (ID) dans l'espace défini entre les deux rembordements Rj.

On notera que la bande de matière intercalaire peut, par exemple, être collée sur la face inférieure FIP de la pièce de support PS. Ce collage peut être réalisé dans la première étape (i) avant que soit effectuée la solidarisation fixe de la pièce de support PS sur la face externe FE1 de l'une des pièces en cuir PCj. Ce collage peut même être réalisé avant la définition des bords amincis B1j sur les faces internes FI1 des deux pièces en cuir PCj. En variante, ce collage peut être réalisé à la fin de la première étape (i) ou bien au début de la seconde étape (ii), avant la solidarisation à la face externe de l'élément d'habitacle EH ou de la couche d'interface CI.

On notera également que l'utilisation d'une bande de matière intercalaire peut, par exemple, se faire lorsque l'on n'utilise pas de couche d'interface CI. Mais on peut également avoir une bande de matière intercalaire dans le cas où il n'y pas de couche d'interface CI, mais aussi dans le cas où il y aurait une couche d'interface CI sous le cuir mais pas sous la pièce de support PS.

Un quatrième exemple de réalisation est illustré non limitativement sur les figures 13 à 15. Il comprend une première étape (i) dans laquelle on définit au moins un bord aminci B1j sur la face interne FI1 des deux pièces en cuir PCj (comme illustré sur la figure 1). Puis, avant d'effectuer le repliement des bords amincis B1j, on solidarise fixement une pièce de support PSj sur la face externe FE1 de chacune des deux pièces en cuir PCj, au niveau de son bord aminci B1j, puis on replie chaque bord aminci B1j afin de constituer des rembordements Rj. Comme illustré sur la figure 14, la constitution des deux rembordements Rj par repliement fait que ces derniers (Rj) se retrouvent tous les deux prolongés par les pièces de support PSj qui leurs sont solidarisées.

Ces dernières solidarisations peuvent se faire par une couture CS et/ou par collage. On notera que les pièces de support PSj peuvent, par exemple, être en matériau textile (tissu ou non tissé) ou en en cuir ou encore en matériau synthétique rigide ou flexible (ou souple), comme par exemple en PVC.

Dans la seconde étape (ii) on couple à l'élément d'habitacle EH les pièces en cuir PCj avec les pièces de support PSj qui prolongent leurs rembordements Rj respectifs de sorte qu'elles (PSj) se prolongent mutuellement (et donc séparent ces pièces en cuir PCj).

Les extrémités libres des pièces de support PSj peuvent être solidarisées l'une à l'autre, par exemple par collage et/ou couture. Dans ce cas, cela induit une légère surépaisseur locale de superposition de ces extrémités libres (qui n'apparaît pas sur les figures 14 et 15). On notera que cette solidarisation se fait de préférence en fin de première étape (i). Mais elle peut également se faire au début de la seconde étape (ii) avant de procéder au couplage.

Puis, on solidarise fixement l'insert décoratif ID sur les pièces de support PS en plaçant ses deux bords B2j respectivement sous les deux rembordements Rj, comme illustré sur la figure 15.

On notera également que dans l'exemple non limitatif illustré sur la figure 15, les pièces de support PSj, l'insert décoratif ID et les pièces en cuir PCj sont couplés à l'élément d'habitacle EH via une couche d'interface CI. Plus précisément, on solidarise fixement les pièces en cuir PCj et les pièces de support PSj sur une face externe FE3 d'une couche d'interface CI qui a été préalablement solidarisée fixement à une face externe FE2 de l'élément d'habitacle EH, et on solidarise fixement l'insert décoratif ID sur la face supérieure FSP des pièces de support PSj.

Cette couche d'interface CI peut, par exemple, être une gaine (ou peau) solidarisée par chauffage (« thermogainage ») ou une mousse solidarisée par collage ou encore une gaine (ou peau) solidarisée par moussage. La gaine (ou peau) peut, par exemple, être réalisée en polypropylène. La mousse est de préférence destinée à conférer une sensation de moelleux. Elle peut, par exemple, être réalisée en polyuréthane.

La solidarisation fixe des pièces en cuir PCj et des pièces de support PSj sur la face externe FE3 de la couche d'interface CI peut, par exemple, se faire par collage. De même, la solidarisation fixe de l'insert décoratif ID sur la face supérieure FSP des pièces de support PSj peut, par exemple, se faire par collage.

Dans ce quatrième exemple de réalisation, les pièces en cuir PCj sont couplées à l'élément d'habitacle EH, avant que l'insert décoratif ID ait été couplé à ce dernier (EH), via les pièces de support PSj. Par conséquent, on a besoin de venir loger les bords opposés B2j de l'insert décoratif ID sous les rembordements Rj (et plus précisément entre ces derniers (Rj) et les bords des pièces de support PSj), ce qui nécessite que l'insert décoratif ID soit au moins légèrement flexible (ou souple).

On notera que pour éviter que le repliement des sous-parties SPk de chaque bord aminci B1j provoque un bourrelet, il est préférable que l'amincissement se fasse sur au moins une moitié de l'épaisseur du bord B1j de chaque pièce en cuir PCj. Par ailleurs, pour éviter que la superposition d'un rembordement Rj et du bord B2j de l'insert décoratif ID (ainsi que de l'éventuel bord d'une pièce de support PS (ou PSj)) provoque un bourrelet important, il est préférable, comme illustré sur les figures que l'amincissement se fasse sur plus de la moitié de l'épaisseur du bord B1j de chaque pièce en cuir PCj.

A titre d'exemple purement illustratif, l'insert décoratif ID peut comporter des petits cristaux. Ainsi, il pourra, par exemple s'agir du produit commercialisé sous la marque cristal fabric^{®} par la société Swarovski. A la place de petits cristaux on pourra, par exemple, utiliser du strass. Mais d'une manière générale tout type d'insert décoratif peut être utilisé, qu'il comprenne des éléments rapportés ou non.

Le procédé selon l'invention offre plusieurs avantages, parmi lesquels :
- une amélioration de la qualité perçue des habitacles, qui peut aller jusqu'à une impression de luxe,
- une grande diversité, et donc une possibilité de différenciation des modèles au sein d'une marque ou entre marques,
- une possibilité de personnalisation des habitacles des véhicules en fonction des souhaits de leurs propriétaires.

## Revendications

1. Procédé de réalisation d'un habillage décoratif (HD) pour un élément (EH) d'un habitacle d'un véhicule, **caractérisé en ce qu'**il comprend une étape (i) dans laquelle on amincit au moins un bord (B1j) de deux pièces en cuir (PCj) sur une face interne (FI1), et on replie chaque bord aminci afin de constituer un rembordement (Rj) sur chaque pièce en cuir (PCj), et une étape (ii) dans laquelle on couple audit élément (EH) lesdites pièces en cuir (PCj) et un insert décoratif (ID) intercalé entre ces dernières (PCj) en ayant deux bords (B2j) placés sous lesdits rembordements (Rj).

2. Procédé selon la revendication 1, **caractérisé en ce que** dans ladite étape (ii) on commence par coupler ledit insert décoratif (ID) en un endroit choisi dudit élément (EH), puis on couple chaque pièce en cuir (PCj) audit élément (EH) en recouvrant lesdits deux bords (B2j) de l'insert décoratif (ID) avec une partie au moins desdits rembordements (Rj).

3. Procédé selon la revendication 2, **caractérisé en ce que** dans ladite étape (ii) on solidarise fixement lesdites pièces en cuir (PCj) et ledit insert décoratif (ID) sur une face externe (FE3) d'une couche d'interface (CI) préalablement solidarisée fixement à une face externe (FE2) dudit élément (EH).

4. Procédé selon la revendication 1, **caractérisé en ce que** dans ladite étape (i), avant d'effectuer ledit repliement, on solidarise fixement une pièce de support (PSj) sur une face externe (FE1) de chaque pièce en cuir (PCj), au niveau de son bord aminci (B1j), puis on replie chaque bord aminci (B1j) afin de constituer des rembordements (Rj) prolongés chacun par ladite pièce de support (PSj) solidarisée, et dans ladite étape (ii) on couple audit élément (EH) lesdites pièces en cuir (PCj) avec lesdites pièces de support (PSj) prolongeant leurs rembordements (Rj) de sorte qu'elles se prolongent mutuellement, puis on solidarise fixement ledit insert décoratif (ID) sur lesdites pièces de support (PSj) en plaçant ses deux bords (B2j) respectivement sous lesdits deux rembordements (Rj).

5. Procédé selon la revendication 1, **caractérisé en ce que** dans ladite étape (i), avant d'effectuer ledit repliement, on solidarise fixement une pièce de support (PS) sur une face externe (FE1) de l'une desdites pièces en cuir (PCj), au niveau de son bord aminci (B1j), puis on replie chaque bord aminci (B1j) afin de constituer des rembordements (Rj) dont l'un est prolongé par ladite pièce de support (PS) qui lui est solidarisée, et dans ladite étape (ii) on couple audit élément (EH) lesdites pièces en cuir (PCj) avec ladite pièce de support (PS) prolongeant l'un de leurs rembordements (Rj) de sorte qu'elle sépare ces pièces en cuir (PCj) en ayant deux de ses bords placés sous lesdits rembordements (Rj), puis on solidarise fixement ledit insert décoratif (ID) sur ladite pièce de support (PS) en plaçant ses deux bords (B2j) respectivement sous lesdits deux rembordements (Rj).

6. Procédé selon la revendication 1, **caractérisé en ce que** dans ladite étape (i), avant d'effectuer ledit repliement, on solidarise fixement une pièce de support (PS), munie dudit insert décoratif (ID), sur une face externe (FE1) de l'une desdites pièces en cuir (PCj), au niveau de son bord aminci (B1j), puis on replie chaque bord aminci (B1j) afin de constituer des rembordements (Rj) dont l'un est prolongé par ladite pièce de support (PS) qui lui est solidarisée, et dans ladite étape (ii) on couple audit élément (EH) lesdites pièces en cuir (PCj) avec ladite pièce de support (PS) prolongeant l'un de leurs rembordements (Rj) de sorte qu'elle sépare ces pièces en cuir (PCj) en ayant deux de ses bords placés sous lesdits rembordements (Rj) et une face supérieure (FSP) munie dudit insert décoratif (ID) avec ses deux bords (B2j) placés respectivement sous lesdits deux rembordements (Rj).

7. Procédé selon la revendication 6, **caractérisé en ce que** dans ladite étape (i), avant d'effectuer ladite solidarisation fixe de la pièce de support (PS) sur une face externe (FE1) de l'une desdites pièces en cuir (PCj), on colle ledit insert décoratif (ID) sur ladite face supérieure (FSP) de la pièce de support (PS).

8. Procédé selon l'une des revendications 6 et 7, **caractérisé en ce que** dans ladite étape (ii) on solidarise fixement lesdites pièces en cuir (PCj), hormis leurs rembordements (Rj), sur une face externe (FE3) d'une couche d'interface (CI) préalablement solidarisée fixement à une face externe (FE2) dudit élément (EH) et interrompue au niveau de chacun desdits rembordements (Rj) et de ladite pièce de support (PS).

9. Procédé selon l'une des revendications 6 et 7, **caractérisé en ce que** dans ladite étape (ii) on solidarise fixement lesdites pièces en cuir (PCj) et ladite pièce de support (PS), hormis des parties situées sous lesdits rembordements (Rj), sur une face externe (FE3) d'une couche d'interface (CI) préalablement solidarisée fixement à une face externe (FE2) dudit élément (EH) et interrompue au niveau de chacun desdits rembordements (Rj).

10. Procédé selon l'une des revendications 5 à 7, **caractérisé en ce que** dans ladite étape (ii) on solidarise fixement sur une face externe (FE2) dudit élément (EH) lesdites pièces en cuir (PCj) et ladite pièce de support (PS) préalablement munie d'une bande de matière intercalaire sur une partie d'une face inférieure (FIP) située sous ledit insert décoratif (ID).

11. Procédé selon l'une des revendications 4 à 7, **caractérisé en ce que** dans ladite étape (ii) on solidarise fixement lesdites pièces en cuir (PCj) et chaque pièce de support (PS, PSj) sur une face externe (FE3) d'une couche d'interface (CI) préalablement solidarisée fixement à une face externe (FE2) dudit élément (EH).

12. Procédé selon l'une des revendications 3, 8, 9 et 11, **caractérisé en ce que** ladite couche d'interface (CI) est choisie dans un groupe comprenant une gaine solidarisée par chauffage à l'élément d'habitacle, une mousse solidarisée par collage à l'élément d'habitacle, et une gaine solidarisée par moussage à l'élément d'habitacle.

13. Procédé selon l'une des revendications 1 à 12, **caractérisé en ce que** dans ladite étape (i) après avoir replié lesdits bords amincis (B1j) en superposant deux sous-parties (SPk), on solidarise ces dernières (SPk) l'une à l'autre par couture.

14. Ensemble comprenant un élément d'habitacle (EH) sur lequel est couplé deux pièces en cuir (PCj), chaque pièce comportant une face interne (FI1) et un bord (B1j), et un insert comportant deux bords (B2J), les deux pièces de cuir (PCj) et l'insert (B2J) formant un habillage décoratif (HD), l'habillage décoratif (HD) de l'élément (EH) étant réalisé suivant le procédé de l'une des revendications de 1 à 13.

15. Véhicule comprenant un habitacle, **caractérisé en ce que** ledit habitacle comprend au moins un ensemble selon la revendication 14.

## Patentansprüche

1. Verfahren zur Herstellung einer dekorativen Verkleidung (HD) für ein Element (EH) eines Innenraums eines Fahrzeugs, **dadurch gekennzeichnet, dass** es einen Schritt (i) umfasst, in dem mindestens ein Rand (B1j) von zwei Lederteilen (PCj) auf einer Innenseite (FI1) dünnt wird, und jede dünne Kante gefaltet wird, um eine Ummantelung zu bilden Anordnung (Rj) an jedem Lederstück (PCj) und einem Schritt (ii), in dem die Lederstücke (PCj) mit dem Element (EH) verbunden werden, und einem zwischen den Lederstücken (PJ) angeordneten dekorativen Einsatz (PID), der zwei unter den Umwicklungen (Rj) angeordnete Ränder aufweist.

2. Verfahren nach Anspruch 1, **dadurch gekennzeichnet, dass** in Schritt (ii) der dekorative Einsatz (ID) an einer ausgewählten Stelle des Elements (EH) gekoppelt wird und danach jedes Lederstück (PCj) mit dem Element (EHS) verbunden wird, indem die beiden Ränder (B2j) des dekorativen Einsatzes (ID) mit mindestens einem Teil der Umwicklungen (Rings (R j)

3. Verfahren nach Anspruch 2, **dadurch gekennzeichnet, dass** in dem Schritt (ii) die Lederteile (PCj) und der dekorative Einsatz (ID) auf einer Außenseite (FE3) einer Grenzflächenschicht (CI) fest verbunden werden, die zuvor fest mit einer Außenseite (FE2) des Elements (EH) verbunden ist.

4. Verfahren nach Anspruch 1, **dadurch gekennzeichnet, dass** in dem Schritt (i) vor dem Falten ein Stützteil (PSj) fest an einer Außenseite (FE1) jedes Lederteils (PCj) an seinem Aminorand (B1j) befestigt wird, und dann jeder Aminorand (B1j) gefaltet wird, um Umwicklungen zu bilden Durch das fest verbundene Trägerteil (PSj) jeweils verlängerte Elemente (Rj) und in Schritt (ii) werden die Lederteile (PCj) mit den Trägerteilen (PSj) gekoppelt, die ihre Umwicklungen (Rj) verlängern, sodass sie sich gegenseitig verlängern, und dann wird der dekorative Einsatz (ID) fest verbunden Auf den Trägerteilen (PSj) sind die beiden Ränder (B2j) jeweils unter den beiden Umwicklungen (Rj) angeordnet.

5. Verfahren nach Anspruch 1, **dadurch gekennzeichnet, dass** in dem Schritt (i) vor dem Falten ein Stützteil (PS) fest an einer Außenseite (FE1) eines der Lederteile (PCj) an dessen Abflachungsrand (B1j) befestigt wird, und dann jeder Abflachungsrand (B1j) gefaltet wird, um Umwicklungen zu bilden Anordnungen (Rj), von denen eines durch das mit ihm verbundene Trägerteil (PS) verlängert ist, und in Schritt (ii) die Lederteile (PCj) mit dem Trägerteil (PS) verbunden sind, die einen ihrer Umwicklungen (Rj) verlängern, sodass sie diese Lederteile (PCj) trennen Zwei seiner Ränder unter den Anschlüssen (Rj) angeordnet sind, und dann wird der dekorative Einsatz (ID) an dem Trägerteil (PS) durch Anordnen seiner beiden Ränder (B2j) jeweils unter den beiden Anschlüssen (Rj) fest befestigt.

6. Verfahren nach Anspruch 1, **dadurch gekennzeichnet, dass** in dem Schritt (i) vor dem Falten ein mit dem Dekoreinsatz (ID) versehenes Stützteil (PS) fest an einer Außenseite (FE1) eines der Lederteile (PCj) an dessen Verjüngungsrand (B1j) befestigt wird und anschließend jede Verjüngung umgebogen wird (B1j) zur Bildung von Umwicklungen (Rj), von denen eines durch das mit ihm verbundene Trägerteil (PS) verlängert wird, und in Schritt (ii) werden die Lederteile (PCj) mit dem Trägerteil (PS) gekoppelt, das eine ihrer Umwicklungen (Rj) verlängert Die Lederteile (PK) weisen zwei ihrer Ränder unter den Umwicklungen (Rj) und eine Oberseite (FSP) mit dem dekorativen Einsatz (IID) auf, wobei die beiden Ränder (B2j) jeweils unter den beiden Umwicklungen (Rj) angeordnet sind.

7. Verfahren nach Anspruch 6, **dadurch gekennzeichnet, dass** in dem Schritt (i) vor dem Ausführen der festen Verbindung des Stützteils (PS) auf einer Außenseite (FE1) eines der Lederteile (PCj) der dekorative Einsatz (ID) auf die Oberseite (FSP) des Stützteils (PS) geklebt wird.

8. Verfahren nach einem der Ansprüche 6 und 7, **dadurch gekennzeichnet, dass** in dem Schritt (ii) die Lederteile (PCj), mit Ausnahme ihrer Umwicklungen (Rj), auf einer Außenseite (FE3) einer Grenzflächenschicht (CI) fest verbunden werden, die zuvor fest mit einer Außenseite (FE2) des Elements (EH) verbunden und auf der Höhe unterbrochen ist jeder der Umwicklungen (Rj) und des Trägerteils (PS).

9. Verfahren nach einem der Ansprüche 6 und 7, **dadurch gekennzeichnet, dass** in Schritt (ii) die Lederteile (PCj) und das Trägerteil (PS) fest verbunden werden, mit Ausnahme von Teilen unter den Umwicklungen (Rj) auf einer Außenseite (FE3) einer Grenzflächenschicht (CI), die zuvor fest mit einer Außenseite (FE) verbunden ist RJ2) des Elements (EH) unterbrochen und an jedem der Umwicklungen (Rj) unterbrochen.

10. Verfahren nach einem der Ansprüche 5 bis 7, **dadurch gekennzeichnet, dass** in dem Schritt (ii) die Lederteile (PCj) und das Trägerteil (PS), das zuvor mit einem Streifen aus Zwischenmaterial auf einem Teil einer Unterseite (FIP) unter dem dekorativen Einsatz (ID) versehen ist, fest auf einer Außenseite (FE2) des Elements (EHS) befestigt werden ...

11. Verschiedenes Verfahren nach einem der Ansprüche 4 bis 7, **dadurch gekennzeichnet, dass** in dem Schritt (ii) die Lederteile (PCj) und jedes Trägerteil (PS, PSj) auf einer Außenseite (FE3) einer Grenzflächenschicht (CI) fest verbunden werden, die zuvor fest mit einer Außenseite (FE2) des Elements (EH) verbunden ist.

12. Verfahren nach einem der Ansprüche 3, 8, 9 und 11, **dadurch gekennzeichnet, dass** die Grenzflächenschicht (ICI) aus einer Gruppe ausgewählt wird, die aus einer Hülle besteht, die durch Erhitzen mit dem Fahrgastraumelement fest verbunden ist, einem Schaum, der durch Kleben mit dem Fahrgastraumelement fest verbunden ist, und einer Hülle, die durch Schäumen mit dem Fahrgastraumelement fest verbunden ist.

13. Verfahren nach einem der Ansprüche 1 bis 12, **dadurch gekennzeichnet, dass** in dem Schritt (i) nach dem Zusammenfalten der verjüngten Kanten (B1j) durch Übereinanderlegen zweier Teilabschnitte (SPk) die letzteren (SPk) durch Nähen miteinander verbunden werden.

14. Anordnung mit einem Innenraumelement (EHS), an das zwei Lederteile (PCj) gekoppelt sind, wobei jedes Teil eine Innenfläche (FI1) und eine Kante (B1j) aufweist, und einem Einsatz mit zwei Rändern (B2J), wobei die beiden Lederteile (PCj) und der Einsatz (B2J) eine dekorverkleidung (HD) bilden (HD) des Elements (EH) nach dem Verfahren eines der Ansprüche 1 bis 13 hergestellt wird.

15. Fahrzeug mit einem Fahrgastraum, **dadurch gekennzeichnet, dass** der Fahrgastraum mindestens eine Baugruppe nach Anspruch 14 umfasst.

## Claims

1. Process for making a decorative coating (HD) for an element (EH) of a vehicle interior, **characterized by** a stage (i) in which at least one edge (B1j) of two leather parts (PCj) is shrunk to an inner face (FI1), and each thin edge is folded to form a realignment (Rj) on each leather part (PCj), and a step (ii) in which the said leather parts (PCj) are combined with a decorative insert (ID) interspersed between them (PCj) having two edges (B2j) placed under the said replenishments (Rj).

2. Process according to Claim 1, **characterized in that** step (ii) the said decorative insert (ID) is first coupled in a chosen place of the said element (EH), then each leather piece (PCj) that element (EH) is coupled by covering the said two edges (B2j) of the decorative insert (ID) with at least part of the said rewordings (Rj).

3. Process according to Claim 2, **characterized in that** step (ii) the said leather parts (PCj) and the said decorative insert (ID) are bonded together on an external face (FE3) of an interface layer (CI) previously bonded to an external face (FE2) of that element (EH).

4. Process according to Claim 1, **characterized in that** step (i), before making the said folding, a support part (PSj) is attached to an external face (FE1) of each leather part (PCj), at the level of its thin edge (B1j), and then each thin edge (B1j) is folded to form replenishments (Rj), each of which is prolonged by the said edge support piece (PSj), and in the said step (ii) the said element (EH) is coupled with the said leather parts (PCj) with the said supporting parts (PSj) extending their refills (Rj) so that they extend each other, then the said decorative insert (ID) is attached to the said supporting parts (PSj) by placing its two edges (B2j) under the two repayments (Rj).

5. Process according to Claim 1, **characterized in that** step (i), before making the said folding, a support part (PS) is attached to an external face (FE1) of one of the said leather parts (PCj), at the level of its thin edge (B1j), then each thin edge (B1j) is folded to form replenishment (Rj), including one is extended by the said support piece (PS) which is attached to it, and in the said step (ii) the said leather parts (PCj) are combined with the said support piece (PS) extending one of their replenishment (Rj) so that it separates these leather parts (PCj) by having two of its edges placed under the said replenishment (Rj), and then it attaches itself together the said decorative insert (ID) on the said support piece (PS) by placing its two edges (B2j) under the said two replenishments (Rj), respectively.

6. Process according to Claim 1, **characterized in that** step (i), before making the said folding, a support piece (PS), fitted with the said decorative insert (ID), shall be bonded together on an external face (FE1) of one of the said leather parts (PCj) at its thinly edge (B1j), and each thinly edge (B1j) shall be folded to form thin edge (B1j) (Rj), one of which is extended by the said support piece (PS) which is joined to it, and in the said step (ii) the said element (EH) is coupled with the said leather parts (PCj) with the said support piece (PS) extending one of their replenishment (Rj) so that it separates these leather parts (PCj) with two of its edges under the said replenishment (Rj) and one upper face (FSP) with the said decorative insert (ID) and its two edges (B2j) placed respectively under the said two replenishments (Rj).

7. Process according to Claim 6, **characterized in that** step (i), before making the said fixed joint of the support part (PS) on an external face (FE1) of one of the said leather parts (PCj), the said decorative insert (ID) is pasted on the said upper face (FSP) of the support part (PS).

8. Process according to one of the claims 6 and 7, **characterized in that** step (ii) the said leather parts (PCj), apart from their replenishment (Rj), are bonded together on an external face (FE3) of an interface layer (Cl), previously bonded to an external face (FE2) of that element (EH) and interrupted at the level of each of the said replenishment (Rj) and of the support piece (PS).

9. Process according to one of the claims 6 and 7, **characterized in that** step (ii) the said leather parts (PCj) and the said supporting part (PS) are bonded together, except for those parts under the said replaning (Rj), on an external face (FE3) of an interface layer (CI) previously bonded together fixed to an external face (FE2) of the said element (EH) and interrupted at the of each of the said refunds (Rj).

10. Process according to one of the claims 5 to 7, **characterized in that** step (ii) the attachment on an external face (FE2) of the said element (EH) is made of leather (PCj) and the said support part (PS), previously fitted with a strip of interlayer material on a part of a lower face (FIP) located under the said decorative insert (ID).

11. Process according to one of the claims 4 to 7, **characterized in that** step (ii) the said leather parts (PCj) and each supporting part (PS, PSj) are bonded together on an external face (FE3) of an interface layer (CI) previously bonded to an external face (FE2) of that element (EH).

12. Process according to one of the claims 3, 8, 9 and 11, **characterized by** the fact that the said interface layer (CI) is chosen in a group consisting of a bolted heater sheath to the passenger compartment element, a bonded foam to the passenger compartment element and a bonded sheath to the passenger compartment element.

13. Process according to one of the claims 1 to 12, **characterized in that** step (i) after folding the said slimy edges (B1j) by superimposing two subparts (SPk), the latter are joined together (SPk) by seam.

14. A set consisting of an interior (EH) element on which two leather parts (PCj) are coupled, each part having an inner face (FI1) and edge (B1j), and an insert with two edges (B2J), two leather parts (PCj) and insert (B2J) forming a decorative covering (HD), the decorative covering (HD) of the element (EH) being carried out according to the process of one of the claims from 1 to 13.

15. A vehicle consisting of a passenger compartment, **characterized by** that passenger compartment having at least one set as per Claim 14.
